# EUROPEAN PATENT APPLICATION

(11) **EP 1 375 447 A1**
(43) Date of publication of application: **02.01.2004**
(21) Application number: 03013259.1
(22) Date of filing: 12.06.2003
(51) Int. Cl.: C04B 35/111, B32B 18/00

(54) **Abrasion resistant aluminum oxide member and method of production thereof**

(30) Priority: 13.06.2002 JP 2002173188
(71) Applicant: National Institute of Advanced Industrial Science and Technology, Tokyo 100-8921 (JP)
(72) Inventor: Yoshizawa, Yu-ichi, AIST Chubu, Nat.Inst.Advanced, Moriyama-ku, Nagoya-shi, Aichi 463-8560 (JP); Hirao, Kiyoshi, Aist Chubu, Nat. Inst. of Adv. Ind, Moriyama-ku, Nagoya-shi, Aichi 463-8560 (JP); Yamauchi, Yukihiko, Aist Chubu, Nat. Inst. of Adv., Moriyama-ku, Nagoya-shi, Aichi 463-8560 (JP); Kanzaki, Shuzo, Aist Chubu, Nat. Inst. of Adv.Ind., Moriyama-ku, Nagoya-shi, Aichi 463-8560 (JP)
(74) Representative: Ebner von Eschenbach, Jennifer

(57) **Abstract**

It is an object to provide an aluminum oxide-based sintered body and a manufacturing method thereof, according to which all of wear resistance, strength and fracture toughness can be exhibited to a high degree in a single sintered body, and there is provided a method of manufacturing a multi-layer aluminum oxide sintered body having high strength and wear resistance as well as high fracture toughness, that has a structure of at least two layers in which a surface layer is a high-strength wear-resistant layer comprising isometric crystals having a small grain size, and an inner part is a high-fracture-toughness layer constituted from anisotropic crystals, the method comprising the steps of (1) preparing a layered body by forming a layer of an aluminum oxide material that has a purity of at least 90% and contains a grain growth inhibiting agent and a layer of an aluminum oxide material that has a purity of at least 90% and contains a grain growth promoting agent, (2) carrying out setting such that the sintering characteristics and the forming density of the two layers of the layered body under pressureless sintering become approximately the same; and (3) sintering the two layers simultaneously in a single step, and a product manufactured using this method is also provided.

## Description

### BACKGROUND OF THE INVENTION

### 1. Field of the Invention

The present invention relates to a wear-resistant aluminum oxide member having a layered structure and a method of manufacturing the member, and more specifically to a high-strength wear-resistant / high-fracture-toughness multi-layer aluminum oxide member that has a structure of at least two layers in which a surface layer is a high-strength wear-resistant layer comprising isometric crystals having a small grain size, and an inner part is a high-fracture-toughness layer constituted from anisotropic crystals, and a method of manufacturing the member. The aluminum oxide wear-resistant member of the present invention is useful, for example, as a structural material for a sliding component of a machine, a lining of a pipe for transporting an ore, a powder, a slurry or the like, a blast nozzle, a mechanical seal, a cutting tool, a die, a pulverizer component, or the like, for which high strength, high wear resistance and high fracture toughness are required, and also as a member such as a component of a semiconductor manufacturing apparatus, a substitute body component such as an artificial joint or a dental material, or the like, for which high mechanical reliability and wear resistance, and biological and chemical inertness are required.

### 2. Description of the Relates Art

Aluminum oxide is chemically stable, has excellent hardness and a suitable degree of mechanical strength, and is inexpensive due to there being abundant resources, and in addition has better wear resistance than other structural ceramics. Moreover, aluminum oxide is not toxic, and hence there are no problems if used as a food industry machine component or a biomaterial for artificial joints or the like. Aluminum oxide is an extremely stable compound, and hence can also be used in applications in which active impurities are extremely loathed such as for a component of a semiconductor manufacturing machine. Furthermore, aluminum oxide can also be used for a component of a manufacturing machine in the ceramics industry or the like, since slight contamination with aluminum oxide will not result in defects such as coloration. In the metals industry as well, aluminum oxide is contained in large amounts as an impurity in ores, and hence even if an ore is contaminated with aluminum oxide the aluminum oxide can be easily removed.

For the above reasons, aluminum oxide is widely used in a great variety of wear-resistant materials. However, with an aluminum oxide sintered body, the fracture toughness, which is an indicator of the reliability of a material, is poor, and hence, despite having worse wear resistance than aluminum oxide, structural ceramics such as silicon nitride and zirconium oxide have been used for members that are subjected to large shocks and members for which high a high degree of reliability is required.

As means for further improving the wear resistance of an aluminum oxide sintered body, there have been reports on materials in which an additive is added to the whole of the sintered body (e.g. Japanese Patent Application Laid-open Nos. H7-206514, H7-237961, and 2001-302336); however, the principal aim is wear resistance, and fracture toughness is not considered. On the other hand, with an object of improving the fracture toughness, there have been reports on materials for which the microstructure of the sintered body is controlled (e.g. Japanese Patent Application Laid-open Nos. H7-257963, H7-277814, H10-158055, H11-071168, H11-1365, and 2001-322865). However, these materials are characterized in that the structure is constituted from crystal grains that have a high aspect ratio and a relatively large grain size, and hence sintering at a relatively high temperature becomes necessary, and thus it is difficult to realize a high degree of strength and wear resistance.

Moreover, as materials that aim to combine both wear resistance and fracture toughness, materials in which an element other than aluminum is diffused in from the surface of the aluminum oxide (e.g. Japanese Patent Application Laid-open No. H6-16468), materials in which iron or the like is added to the whole of the sintered body, and a surface modified layer is formed through heat treatment under a controlled atmosphere (e.g. Japanese Patent Application Laid-open Nos. H9-328447, and 2001-316171), and so on are known. However, with these materials, surface modification is carried out after preparing a single material, and hence it is difficult to make both the surface layer and the inner layer be optimum materials, and moreover due to the surface modification being carried out, the number of manufacturing steps increases, and atmosphere control must be carried out, which is expensive. For these reasons, in the technical fields in question, there are strong demands for the development of structural members that are inexpensive, are wear-resistant, and have high fracture toughness.

Amid this state of affairs, in view of the prior art described above, the present inventors carried out assiduous studies with an aim of developing a novel aluminum oxide member according to which the various problems of the prior art described above can be thoroughly resolved, and as a result focussed on the difference in required properties between the surface layer and the inner layer of the member, and carried out various development research into a novel wear-resistant member in which a surface layer, which is required to have wear resistance and strength, has a microstructure constituted from minute crystal grains, and an inner layer has a microstructure constituted from crystal grains having a high aspect ratio and a relatively large grain size so that a high fracture toughness can be obtained; as a result, the present inventors discovered that by making a powder containing a grain growth inhibiting agent and a powder containing a grain growth promoting agent into a layered molded body, and sintering these powders simultaneously in a single step, it is possible to realize a high level of all of wear resistance, strength and fracture toughness, thus accomplishing the present invention.

### SUMMARY OF THE INVENTION

It is thus an object of the present invention to provide an aluminum oxide wear-resistant member that is inexpensive and exhibits a high level of all of wear resistance, strength and fracture toughness, and a method of manufacturing the member.

Moreover, it is an object of the present invention to provide a wear-resistant member that has aluminum oxide as a principal component thereof and comprises at least two layers, being a surface layer that has excellent wear resistance and has a flexural strength of at least 400MPa, and an inner layer that has a fracture toughness of at least 5MPa·m^{1/2}, the wear-resistant member that has aluminum oxide as a principal component thereof being manufactured by simultaneously sintering in a single step a layered molded body of powders that each have a purity of at least 90% and contain a grain growth inhibiting agent or a grain growth promoting agent.

To attain the above objects, the present invention is constituted through the following technical means.
(1) A method of manufacturing a multi-layer aluminum oxide sintered body having high strength and wear resistance as well as high fracture toughness, that has a structure of at least two layers in which a surface layer is a high-strength wear-resistant layer comprising isometric crystals having a small grain size, and an inner part is a high-fracture-toughness layer constituted from anisotropic crystals, the method comprising the steps of:
   (a) preparing a layered body by forming a layer of an aluminum oxide material that has a purity of at least 90% and contains a grain growth inhibiting agent and a layer of an aluminum oxide material that has a purity of at least 90% and contains a grain growth promoting agent;
   (b) setting the sintering characteristics and the forming density of the two layers of the layered body to be approximately the same under atomospheric sintering; and
   (c) sintering the two layers simultaneously in a single step.
(2) The method described in (1) above, wherein an aluminum oxide powder containing a grain growth inhibiting agent and an aluminum oxide powder containing a grain growth promoting agent are subjected to at least one selected from out of metal die molding, cold isostatic molding, casting, and drain molding to produce a layered molded body.
(3) The method described in (1) above, wherein a single-material tape of each of the aluminum oxide materials is prepared, and then the tapes are laminated together to produce the layered body.
(4) The method described in (1) above, wherein the layered body is sintered using at least one selected from out of pressureless sintering, hot pressing, and hot isostatic pressing.
(5) A multi-layer aluminum oxide sintered body having high strength and wear resistance as well as high fracture strength, that is manufactured using the method described in any of (1) through (4) above and comprises at least two layers, being a surface layer that is wear-resistant and has a flexural strength of at least 400MPa, and an inner layer that has a fracture toughness of at least 5MPa·m^{1/2}.
(6) The multi-layer aluminum oxide sintered body described in (5) above, having, upon structure observation of a cut surface, a surface layer in which crystal grains having an aspect ratio of not more than 1.5 and a grain size of not more than 3µm account for at least 80area%, and an inner layer in which crystal grains having an aspect ratio of at least 1.5 and a grain size of at least 3µm account for at least 30area%
(7) A structural ceramic member, comprising the multi-layer aluminum oxide sintered body having high strength and wear resistance as well as high fracture toughness as described in (5) or (6) above as a constituent element thereof.

### BRIEF DESCRIPTION OF THE DRAWINGS

FIG. 1 shows a scanning electron micrograph of a polished corroded surface of a sintered body manufactured in Example 1; and
FIG. 2 shows a scanning electron micrograph of a fracture surface of a member manufactured in Example 4.

### DESCRIPTION OF THE PREFERRED EMBODIMENTS

Next, the present invention will be described in more detail.

Considering the properties required of the surface and the inside of a material, the present invention relates to a multi-layer aluminum oxide sintered body characterized in that the surface of the material is made to have a structure in which the crystal grains are minute and have a low aspect ratio so that the wear resistance and the strength are excellent, and the inside is made to have a microstructure constituted from crystal grains that have a large grain size and a high aspect ratio so that the fracture toughness is excellent. In general, the sintering temperature at which a structure constituted from minute crystal grains is obtained and the sintering temperature at which a structure constituted from crystal grains having a large grain size and a high aspect ratio is obtained differ greatly, and hence it is difficult to simultaneously sinter both of these at the same sintering temperature.

Consequently, in the present invention, a powder that is at least 90% aluminum oxide and contains or has had added thereto a grain growth inhibiting agent is used for the surface layer, and a powder that is at least 90% aluminum oxide and contains or has had added thereto a grain growth promoting agent giving a composition and grain size enabling a high-toughness sintered body to be obtained is used for the inner layer. In the present invention, a high-purity aluminum oxide powder, a low-soda aluminum oxide powder, a normal-purity aluminum oxide powder or the like is used as the aluminum oxide raw material for both the surface layer and the inner layer. Moreover, preferable examples of the grain growth inhibiting agent added to the surface layer powder are magnesium oxide, zirconium oxide, silicon carbide and so on, and preferable examples of the grain growth promoting agent added to the inner layer powder are sodium oxide, calcium oxide and so on. However, in the present invention there is no limitation to these materials, with it being possible to similarly use other materials having equivalent effects.

In the present invention, as each of the powders used, a powder that already contains a grain growth inhibiting agent or grain growth promoting agent as described above can be used. However, if the amount of the additive (i.e. the grain growth inhibiting agent or grain growth promoting agent) in each powder is large, then cracks will arise due to the difference in thermal expansion between the two layers, and hence it will not be possible to obtain a sound material; it is thus preferable to make the amount of the additive in each powder be not more than 10%. Moreover, if the sintering characteristics of the two layers differ, then cracking and warping of the sintered body will occur, and hence it is necessary to select powders for the two layers that have similar sintering characteristics to one another. Moreover, if the forming densities of the two layers are different to one another, then again cracking and warping will occur, and hence it is necessary to select the powder pretreatment method, the molding method and so on such that these forming densities are approximately the same as one another. Specifically, for example, pulverization of the raw materials, selection of the raw material powders, granulation conditions, slurry concentrations, dispersion conditions and so on are all adjusted in an overall way.

In the present invention, for example, one of the powders that has been selected considering these various conditions is loaded into a metal die, and preliminary molding is carried out with a light load using a punch, and then the punch is temporarily pulled out; the other powder is then layered onto the preliminary molded body in the metal die, and then the punch is inserted and main molding is carried out. Alternatively, layers of the two powders are placed in a metal die, and main molding is carried out in one go. The thicknesses of the two layers vary according to the purpose of usage of the member and the usage conditions, but in general the amount of each powder is adjusted such that the thickness of that layer becomes from 1% to 50% of the total thickness of the member. Note that to prevent slight warping, it is effective to form a surface layer on both sides of the inner layer.

In the present invention, the molding need not be limited to metal die molding as described above, but rather a layered molded body may be produced using one or more selected from out of metal die molding, cold isostatic molding, casting, and drain molding, or each of the powders may be made into a single-material tape using a doctor blade, extrusion or the like, and then the tapes may be laminated together to produce a layered body. Moreover, it is not necessary to carry out the layering to form a uniform flat surface, but rather, depending on the member, a curved surface, a cylinder, or a spherical shape may be formed, and/or the thickness of the surface layer may be made to vary from part to part of the member. In particular, in the case of pressureless sintering, the sintering characteristics and the forming density are set so as to be approximately the same for the two layers of the layered body. The two layers of the layered molded body are sintered simultaneously in a single step using at least one selected from out of pressureless sintering, hot pressing, and hot isostatic pressing. In the case of sintering using hot pressing or hot isostatic pressing, there is less of a requirement for the sintering characteristics and the forming density to be similar for the two layers. The sintering temperature varies according to the types and amounts of the aluminum oxide powders and additives used, but is generally 1300 to 1700°C, more preferably 1400 to 1600°C.

Note, however, that a different temperature may be used so long as the prescribed microstructure can be obtained. In a sintered body obtained using the method of the present invention, the wear-resistant high-strength surface layer is constituted from crystal grains having an aspect ratio of not more than 1.5 and a grain size of not more than 3µm, and the inner layer is constituted from grains having an aspect ratio of at least 1.5 and a grain size of at least 3µm; as a result, the flexural strength as measured using the 3-point bending test as stipulated in JIS-R1601 becomes at least 400MPa, the fracture toughness as stipulated in JIS-R1607 becomes at least 5MPa·m^{1/2}, and the comparative wear amount as measured using a dry pin-on-disk method becomes not more than 1×10⁻⁹mm²/N, i.e. an aluminum oxide wear-resistant member that is excellent in terms of all three of strength, fracture toughness and wear resistance can be obtained. Up until now no reports could be found of an aluminum oxide member having all of high wear resistance, high fracture toughness and high strength as described above having been manufactured.

In general, the sintering temperature at which a structure constituted from minute crystal grains is obtained and the sintering temperature at which a structure constituted from crystal grains having a large grain size and a high aspect ratio is obtained differ greatly, and hence it is extremely difficult to simultaneously sinter both of these at the same sintering temperature in a single step. However, in the present invention a specified constitution is adopted in which (1) a layered body is prepared by forming a layer of an aluminum oxide material that has a purity of at least 90% and contains a grain growth inhibiting agent and a layer of an aluminum oxide material that has a purity of at least 90% and contains a grain growth promoting agent, (2) the sintering characteristics and the forming density are set to be approximately the same for the two layers of the layered body under pressureless sintering, and (3) the two layers are sintered simultaneously in a single step. As a result, it becomes possible to sinter the above-mentioned two layers simultaneously in a single step, and hence it becomes possible to provide a structural ceramic member comprising a high-strength wear-resistant / high-fracture-toughness multi-layer aluminum oxide sintered body having a structure of at least two layers in which a surface layer is a high-strength wear-resistant layer comprising isometric crystals having a small grain size, and an inner part is a high-fracture-toughness layer constituted from anisotropic crystals.

In the past, there have been no examples of success in simultaneously sintering the two layers of a material having a two-layer structure as described above in a single step. However, according to the method of the present invention, it is possible to sinter the two layers simultaneously in a single step, and as a result it becomes possible to manufacture and provide a ceramic layered member that has aluminum oxide as a principal component thereof and comprises at least two layers, being a surface layer that has a flexural strength of at least 400MPa and a wear resistance such that the comparative wear amount as measured using a dry pin-on-disk method is not more than 1×10⁻⁹mm²/N, and an inner layer that has a fracture toughness of at least 5MPa·m^{1/2}.

### Examples

Next, a concrete description of the present invention will be given through examples. However, it should be noted that the present invention is not limited whatsoever by the following examples.

### First Examples

### (1) Manufacture of hot-pressed sintered bodies

For a surface layer, a high-purity alumina powder having added thereto 0.1wt% of a magnesium oxide powder as a grain growth inhibiting agent (Example 1), 10wt% of a zirconium oxide powder as a grain growth inhibiting agent (Example 2), or 10wt% of a silicon carbide powder as a grain growth inhibiting agent (Example 3), was selected, and in each case mixing was carried out for 1 day in a ball mill using high-purity alumina balls and distilled water, and then drying was carried out. For an inner layer, a normal-purity fine powder obtained by seeding was used. A layer of 30g of the inner layer powder and a layer of 10g of the surface layer powder were built up in a 42×47mm carbon die, and then the carbon die was held at 1400°C to 1500°C for 1 hour in a vacuum while applying a pressure of 40MPa, whereby a hot-pressed sintered body was obtained. Comparison was carried out with a material obtained by hot pressing only the inner layer powder under the same conditions as above (Comparative Example 1), and a high-purity fine-crystal-grain hot-pressed sintered body (Comparative Example 2).

### (2) Test methods

Next, a 27×30mm plate-shaped test piece and a ball having a tip radius of 5mm were machined from each plate-shaped sintered body, and a dry pin-on-disk wear test was carried out with a radius of revolution of 10mm, a speed of revolution of 172rpm, a load of 24.5N, and a test time of 10min. Moreover, a 3×4×40mm test piece was cut out from each sintered body, and a 3-point bending test as stipulated in JIS-R1601, and a fracture toughness test as stipulated in JIS-R1607 were carried out. Regarding the microstructure, in each case a test piece that had been subjected to mirror polishing and hot corrosion was observed using a scanning electron microscope, and the form of the aluminum oxide grains in a 0.4mm² area was photographed. The grain size, the aspect ratio, and the proportion by area of grains having an aspect ratio of at least 1.5 were then measured. Moreover, to carry out a comparison of erosion characteristics, commercially sold #800 grain size silicon carbide abrasive grains were blasted using a mircroblaster with an air pressure of 0.1Mpa from a 0.5mm nozzle onto a test piece manufactured from each of the materials described above from 0.5mm above the test piece for 30 seconds, and a comparison of the worn volume was carried out.

### (3) Results

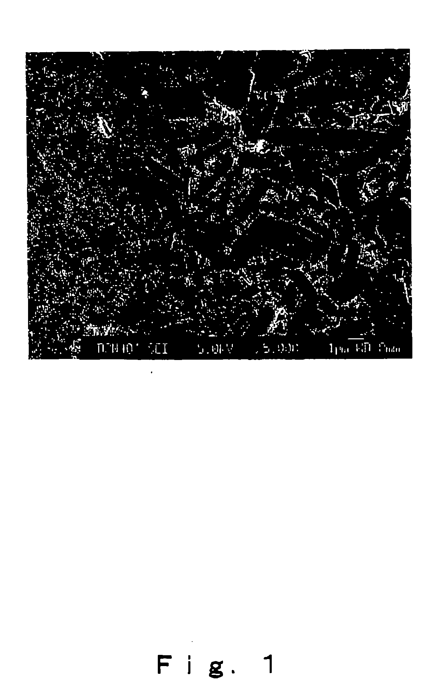

FIG. 1 shows the scanning electron micrograph of the polished corroded surface of the sintered body of Example 1. Table 1 shows the strength of each of the manufactured members, the fracture toughness, the wearing rate according to the ball-on-disk wear test, and the grain proportions according to the structure observation. Table 2 shows the wear characteristics of the invented materials and comparative materials according to the sandblasting. Moreover, examples are also shown for zirconium oxide and silicon nitride, which are typical ceramics for structural members other than aluminum oxide.

**Table 1**

| Properties of invented materials and comparative materials (hot-pressed) | | | | | |
|---|---|---|---|---|---|
| | Strength (MPa) | Fracture toughness (MPa·m^{1/2}) | Comparative wear amount (mm²/N) | Proportion of grains having aspect ratio of not more than 1.5 and grain size of not more than 3 µm | Proportion of grains having aspect ratio of at least 1.5 and grain size of at least 3 µm |
| Example 1 | 780 | 6.8 | <1 × 10⁻¹⁰ | 95 | 0(Surface) |
| | | | | 30 | 40 (Inner part) |
| Example 2 | 1020 | 8.1 | <1 × 10⁻¹⁰ | 98 | 0 (Surface) |
| | | | | 15 | 80 (Inner part) |
| Example 3 | 980 | 8.5 | <1 × 10⁻¹⁰ | 92 | 5 (Surface) |
| | | | | 17 | 70 (Inner part) |
| Comparative Example 1 | 620 | 6.6 | 7 × 10⁻⁸ | 30 | 40 |
| Comparative Example 2 | 750 | 2.8 | <1 × 10⁻¹⁰ | 95 | 0 |

**Table 2**

| Wear characteristics of invented materials and comparative materials according to sandblasting (hot-pressed) | |
|---|---|
| | Worn volume according to sandblasting (mm²) |
| Example 1 | 0.014 |
| Comparative Example 1 | 0.022 |
| Comparative Example 2 | 0.016 |
| Zirconium oxide | 0.042 |
| Silicon nitride | 0.036 |

As shown in Table 1 above, it was found that according to the present invention a sintered body that is excellent in terms of all of strength, fracture toughness and sliding wear characteristics compared with a single-layer sintered body can be obtained through one-step sintering.

Moreover, as shown in Table 2 above, it was found that the test piece of Example 1 also exhibits good erosion test results.

### Second Examples

### (1) Manufacture of pressureless sintered bodies

A commercially sold magnesium oxide-containing low-soda aluminum oxide powder was selected for a wear-resistant layer and a low-soda aluminum oxide powder was selected for an inner layer (Example 4), or a high-purity aluminum oxide powder having added thereto 0.1wt% of a magnesium oxide powder as a grain growth inhibiting agent was selected for a wear-resistant layer and a high-purity aluminum oxide powder having added thereto 0.1wt% of a calcium oxide powder as a grain growth promoting agent was selected for an inner layer (Example 5), and in each case the wear-resistant layer powder and the inner layer powder were separately disintegrated in a ball mill and dried, and then 24g of the inner layer powder was loaded into a 44×52mm metal die, provisional molding was carried out with a pressure of 10MPa, the upper punch was pulled out, and then 8g of the wear-resistant layer powder was loaded in, and a layered body was molded with a pressure of 40MPa. After that, the layered molded body was sealed in a rubber die, and cold isostatic molding was carried out with a pressure of 200MPa. Using an electric furnace, the molded body was then subjected to pressureless sintering at 1400 to 1650°C in an air atmosphere, thus obtaining a plate-shaped sample. For Comparative Examples 3 and 4, the surface layer and the inner layer of Example 4 were each sintered alone as above. Moreover, Comparative Examples 5 and 6 were each a commercially sold wear-resistant aluminum oxide sintered body.

### (2) Test methods

The test methods were the same as for the hot-pressed sintered bodies in the First Examples described earlier.

### (3) Results

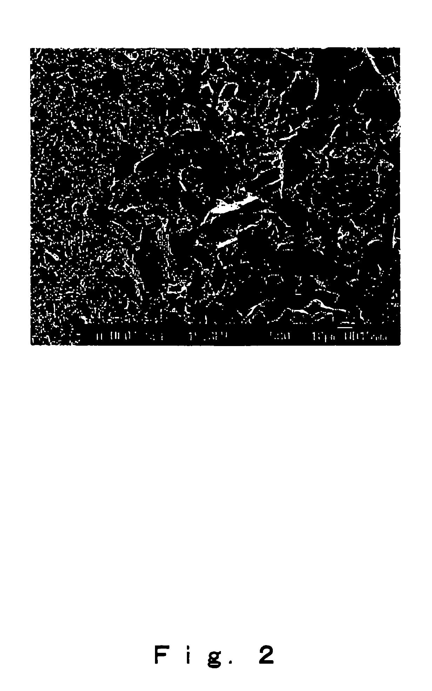

Table 3 shows the strength, the fracture toughness, the wearing rate according to the ball-on-disk wear test, and the grain proportions according to the structure observation. FIG. 2 shows a scanning electron micrograph of a fracture surface of a manufactured member.

**Table 3**

| Properties of invented materials and comparative materials (pressureless sintering) | | | | | |
|---|---|---|---|---|---|
| | Strength (MPa) | Fracture toughness (MPa·m^{1/2}) | Comparative wear amount (mm²/N) | Proportion of grains having aspect ratio of not more than 1.5 and grain size of not more than 3 µm | Proportion of grains having aspect ratio of at least 1,5 and grain size of at least 3 µm |
| Example 4 | 530 | 6.1 | <1 × 10⁻¹⁰ | 94 | 0 (Surface) |
| | | | | 13 | 75 (Inner part) |
| Example 5 | 600 | 6.7 | <1 × 10⁻¹⁰ | 90 | 5 (Surface) |
| | | | | 20 | 35 (Inner part) |
| Comparative Example 3 | 580 | 4.0 | <1 × 10⁻¹⁰ | 93 | 0 |
| Comparative Example 4 | 280 | 6.4 | 6 × 10⁻⁸ | 15 | 70 |
| Comparative Example 5 | 270 | 2.9 | 3 × 10⁻⁹ | 3 | 80 |
| Comparative Example 6 | 370 | 4.6 | 6 × 10⁻⁹ | 10 | 35 |

As shown in Table 3 above, it was found that according to the present invention, even in the case of pressureless sintering, a sintered body that is excellent in terms of all of strength, wear resistance and fracture toughness compared with a single-layer sintered body or a commercially sold wear-resistant aluminum oxide sintered body can be obtained.

As described in detail above, the present invention relates to a wear-resistant member that has as a principal component thereof aluminum oxide and is manufactured by simultaneously sintering in a single step a layered molded body of powders that each have a purity of at least 90% and contain a grain growth inhibiting agent or a grain growth promoting agent, and a method of manufacturing the wear-resistant member. According to the present invention, the following exceptional effects are exhibited: 1) it is possible to manufacture a high-strength wear-resistant / high-fracture-toughness multi-layer aluminum oxide sintered body that has a structure of at least two layers in which a surface layer is a high-strength wear-resistant layer comprising isometric crystals having a small grain size, and an inner part is a high-fracture-toughness layer constituted from anisotropic crystals; 2) by simultaneously sintering in a single step a layered body having a two-layer structure as described above, it is possible to manufacture, through a simple process and at low cost, an aluminum oxide wear-resistant member that exhibits all of wear resistance, strength and fracture toughness to a high degree, and has excellent chemical stability, mechanical properties and so on; 3) a method of manufacturing the above can be provided; and 4) the aluminum oxide wear-resistant member of the present invention is useful as a sliding component of a machine, a component of a semiconductor manufacturing apparatus, or the like, for which high strength, high wear resistance and high fracture toughness are required.

## Claims

1. A method of manufacturing a multi-layer aluminum oxide sintered body having high strength and wear resistance, as well as high fracture toughness, that has a structure of at least two layers in which a surface layer is a high-strength wear-resistant layer comprising isometric crystals having a small grain size, and an inner part is a high-fracture-toughness layer constituted from anisotropic crystals, the method comprising the steps of:
(1) preparing a layered body by forming a layer of an aluminum oxide material that has a purity of at least 90% and contains a grain growth inhibiting agent and a layer of an aluminum oxide material that has a purity of at least 90% and contains a grain growth promoting agent;
(2) setting the sintering characteristics and the forming density of the two layers of said layered body to be approximately the same under atomospheric sintering; and
(3) sintering the two layers simultaneously in a single step.

2. The method according to claim 1, wherein an aluminum oxide powder containing a grain growth inhibiting agent and an aluminum oxide powder containing a grain growth promoting agent are subjected to at least one selected from out of metal die molding, cold isostatic molding, casting, and drain molding to produce a layered molded body.

3. The method according to claim 1, wherein a single-material tape of each of said aluminum oxide materials is prepared, and then the tapes are laminated together to produce the layered body.

4. The method according to claim 1, wherein said layered body is sintered using at least one selected from out of pressureless sintering, hot pressing, and hot isostatic pressing.

5. A multi-layer aluminum oxide sintered body having high strength and wear resistance as well as high fracture toughness, that is manufactured using the method according to any of claims 1 through 4 and comprises at least two layers, being a surface layer that is wear-resistant and has a flexural strength of at least 400MPa, and an inner layer that has a fracture toughness of at least 5MPa·m^{1/2}.

6. The multi-layer aluminum oxide sintered body according to claim 5, having, upon structure observation of a cut surface, a surface layer in which crystal grains having an aspect ratio of not more than 1.5 and a grain size of not more than 3µm account for at least 80area%, and an inner layer in which crystal grains having an aspect ratio of at least 1.5 and a grain size of at least 3µm account for at least 30area%.

7. A structural ceramic member, comprising the multi-layer aluminum oxide sintered body having high strength and wear resistance as well as high fracture toughness according to claim 5 or 6 as a constituent element thereof.
